# EUROPEAN PATENT SPECIFICATION

(11) **EP 2 493 209 B1**
(45) Date of publication and mention of the grant of the patent: **09.09.2015**
(21) Application number: 11290108.7
(22) Date of filing: 28.02.2011
(51) Int. Cl.: H04Q 11/00, H04B 10/077, H04B 10/272, H04B 10/80

(54) **Method of remote optical powering and communication in an optical communication network**
Verfahren zur optischen Fernenergieversorgung und Kommunikation in einem optischen Kommunikationsnetzwerk
Procédé d'alimentation optique distante et communication dans un réseau de communication optique

(43) Date of publication of application: 29.08.2012
(73) Proprietor: ALCATEL LUCENT, 92100 Boulogne-Billancourt (FR)
(72) Inventor: Hiba, Benian, 76131 Karlsruhe (DE); Hehmann, Jörg, 71263 Weil der Stadt (DE); Schmuck, Harald, 71701 Schwieberdingen (DE)
(74) Representative: Lück, Stephan

(56) References cited:
- WO-A1-2009/044948
- US-A1- 2010 014 867
- US-A1- 2010 104 287

## Description

The present invention concerns a method for remote optical powering and communication in an optical communication network. The present invention concerns also a corresponding termination device, an optical splitter and an optically powered device.

Nowadays the number of optical communication networks, in particular of optical access networks, is increasing. The optical communication networks are for instance PON (PON = Passive Optical Networks). The communication quality depends on the quality of the optical signal. The optical signal quality is influenced by the intensity fluctuations and the linewidth of optical signals. When the optical signal is split by an optical splitter in many signals N, e.g. into N=32 or N=64 signals, whereby each of these signals is a copy of the original signal, with respect to the information carried by the optical signal, but with by factor of 1/N reduced intensity. However, the signal noise will be not reduced by this factor 1/N. Therefore the optical splitter provides an output signal with a low signal quality to network devices after the optical splitter.

Document US2010/014867 A1 (21 January 2010) discloses a method of remote optical powering in an optical network.

It is the object of the present invention to provide an improved remote optical powering and communication in an optical communication network.

The object of the present invention is achieved by a method according to claim 1.

The object of the present invention is also achieved by a termination device according to claim 8. optically powered device. The object of the present invention is further achieved by a system according to claim 9.

Embodiments of the present invention provide that the optically powered device does not require an auxiliary power supply. However, an auxiliary power supply can be provided to the optically powered device or can be comprised by the optically powered device. In case the optically powered device does not provide an auxiliary power supply the maintenance costs are reduced since no discharged batteries have to be replaced or no auxiliary power supply has to be maintained. Batteries and/or capacitors of the optically powered device being in accordance with the invention can be charged and/or recharged by means of the second light signal. Therefore it is possible that the powering can be done independently from an onside solution like a battery power supply or direct powering via a power socket. No utility services are needed to exchange the battery.

For example, in case the optical communication network is a PON and there is an active device, like an active demarcation point device, which does not have power supply, e.g. because the battery is discharged and it does not have an auxiliary power supply, behind a passive optical splitter, then the optical power typically split by a factor of 1:32 to 1:64 by the passive optical splitter available to the active device will be too weak for harvesting enough energy to power supply the active device and to ensure a reliable operation.

Preferably, during times when the batteries and/or capacitors of the optically powered device being in accordance with the invention are sufficiently charged to enable operation of the optically powered device, the second light signal can be used for the transport of status information, control commands and/or, preferably communication, data.

It is also possible, that embodiments of the present invention provide amplification of the first light signal at the optical splitter and/or at the optically powered device by means of the second light signal as power source. Thereby, an improved SNR (SNR = Signal-to-Noise ratio) and consequently an improved QoS (QoS = Quality of Service) is provided.

Embodiments according to the present invention provide optical communication networks which are easy to operate and reliable.

Further advantages are achieved by embodiments of the invention indicated by the dependent claims.

According to a preferred embodiment of the invention the optical splitter comprises a dual-function arrayed waveguide grating circuit. The dual-function arrayed waveguide grating circuit separates the second light signal into one or more corresponding signals having each a wavelength of the one or more second wavelengths being associated with one or more of the at least one second termination device and being different from each other. The optical splitter forwards the one or more corresponding signals as the second light signal to the at least one optically powered device as associated with the wavelength. The optical splitter comprising a dual-function arrayed waveguide grating circuit provides wavelength routing.

According to a preferred embodiment of the invention the optical splitter comprises an optical coupler, an optical splitting unit and an optical switching unit. The optical coupler provides the first light signal to the optical splitting unit and the second light signal to the optical switching unit. The optical switching unit splits the second light signal into one or more corresponding signals having the same wavelength being one of the one or more second wavelengths and being each associated with one or more of the at least one second termination devices. The optical switching unit controls with the one or more corresponding signals of the second light signal the optical splitting unit for forwarding the first light signal to the at least one second termination devices together with the one or more corresponding signals as the second light signal to the at least one optically powered device associated with the at least one second termination device. The optical splitter comprising an optical splitting unit and an optical switching unit provides routing based on the encoded information by modulation of the second light signal.

Preferably, information encoded in the first light signal and/or the second light signal is achieved by phase and/or amplitude modulation of the first light signal and/or the second light signal, respectively.

The optical splitter comprising a dual-function arrayed waveguide grating circuit and the optical splitter comprising an optical splitting unit and an optical switching unit provide optical power splitting and a high Signal-to-Noise ratio.

According to a preferred embodiment of the invention the optical splitter forwards the first light signal to a subset of the at least one second termination device or each of the at least one second termination device. Thereby, it is possible that the at least on optically powered device is powered selectively or non-selectively.

Furthermore, it is possible that the optical splitter forwards the first light signal to at least two optical powered devices. Thereby multicast communication can be provided by the optical communication network.

According to a preferred embodiment of the invention the first termination device provides at least two lasers. The at least two lasers emit the first light signal and the second light signal. The first light signal and the second light signal are distinguishable by means of the one or more linewidths of their one or more wavelengths associated with the first light signal and the second light signal. It is possible to associate the receiving and/or transmitting network traffic transported via the optical communication network to different wavelengths of the first and second light signals. Furthermore, each wavelength can be associated to one of the at least one second termination device. Thereby, the wavelengths of the second light signal provide a network address information of the one of the at least one second termination devices.

Preferably, the first termination device provides two different wavelengths for the receiving communication data traffic and the transmitting communication data traffic, preferably by means of two lasers.

It is also possible that communication via the first light signal and/or the second light signal is bidirectional.

According to a preferred embodiment of the invention the first termination device comprises at least one fixed wavelength laser. The at least one fixed wavelength laser generates the second light signal using an amplitude modulation for encoding information about the at least one second termination device and/or at the at least one optically powered device.

According to a preferred embodiment of the invention the first termination device comprises at least one tunable wavelength laser. The at least one tunable wavelength laser generates the second light signal using a wavelength modulation for encoding information about the at least one second termination device and/or at the at least one optically powered device.

It is possible that the first light signal and/or the second light signal are additionally modulated by at least 5% to 100%, preferably 10%, in order to encode information. The first light signal can be modulated by 100%. The second light signal can be modulated by 10%. This additional modulation can be provided at the first termination point, which can be a central office, by means of a tunable laser. The additional modulation of a second light signal can ensure that the optically powered device is powered sufficiently and that there is a reliable communication path established by means of the second light signal.

However, it is also possible that further information is encoded into the first light and/or the second light signal not limited to the at least one second termination device. The information and/or the further information can be encoded into the first light and/or the second light signal by means of a fixed wavelength laser or a tunable wavelength laser of the first termination device or another network entity of the optical communication network. The encoded information can comprise the network address information, status information of network entities and/or data and commands for remote administration and maintenance of network entities. The network entities are one or more entities selected from the group of first termination device, optical splitter, optically powered device and second termination device.

Furthermore, it is possible that the status information comprises a subscriber identity of the subscriber to a communication service provided through the optical communication network. The status information can comprise status information about the network entities, in particular their device status, wherein the status information is selected from the group of available bit rate, SNR, device sensor readings in case the network entity comprises a sensor device, device active and/or device inactive status and power status, such as battery or capacitor charge state in case the network entity is an optically powered device. The commands and/or control commands for remote administration and maintenance of network entities can be selected from the group of activate the network entity, deactivate the network entity, reset the network entity, read, write and/or delete data of stored data at the network entity when the network entity comprises a storage device which is preferably provided by a control unit of the network entity.

According to a preferred embodiment of the invention the at least one optically powered device comprises an optical interface, a photo element and a battery and/or a capacitor. The optical interface splits the received first light signal and second light signal. The optical interface provides the second light signal to the photo element. The photo element charges the battery and/or the capacitor of the at least one optically powered device. The battery powers and/or the capacitor powers the control unit. Preferably, the at least one optically powered device comprise a control unit. The control unit can receive the first light signal form the optical interface for forwarding the first light signal to the at least one second termination device. However, it is possible, that the first light signal is forwarded, preferably transparently, to the at least one second termination device.

According to a preferred embodiment of the invention the optically powered device comprises a control unit. The control unit is adapted to receive the first light signal from the optical interface and to forward the first light signal to the at least one second termination device.

According to a preferred embodiment of the invention the battery and/or the capacitor is electronically connected to the control unit for powering the control unit and/or the optically powered device.

According to a preferred embodiment of the invention status information is determined at the optical splitter and/or at the at least one optically powered device. The optical splitter and/or the at least one optically powered device, respectively comprises an optical coupler and/or an optical interface, respectively. The optical coupler encodes and/or an optical interface encodes the status information into the second light signal. The optical splitter and/or the optical interface, respectively transmits the second light signal to the first termination device.

Preferably, the optical coupler is an active device. The optical coupler can comprise a passive optical coupler and a control unit enabling modulation and/or encoding of light signals.

It is possible that the first and the second light signal provides bidirectional communication between the optical communication network entities, which are preferably the first termination device, the optical splitter, the optically powered device and/or the second termination device.

Furthermore, when a battery and/or a capacitor of the optically powered device is, preferably fully, charged, then the second light signal can be used for transmitting information, in particular status information, to the other optical communication network entities, which are preferably the first termination device, the optical splitter, the optically powered device and/or the second termination device. It is also possible to transmit via the second light signal control commands to enable remote maintenance of the optical communication network entities. Therefore it is possible to separate the use data traffic transported by the first light signal from the administration data traffic, which comprises the control commands and/or the status information, transported by the second light signal.

Preferably, the optical communication network is a PON, which can be based on the Ethernet protocol, the ATM (ATM = Asynchronous Transfer Mode) and/or the GEM (Generic Encapsulation Method). It is possible that the optical communication network is operated according to the TCP/IP protocol and a TCP/IP stack is provided (TCP =Transport Control Protocol, IP = Internet Protocol).

It is possible that the optical network is a is an access network or a core network.

These features as well as further features and advantages of the invention will be better appreciated by reading the following detailed description of presently preferred exemplary embodiments taken with the accompanying drawings of:
- Figure 1: shows a diagram of an optical communication network.
- Figure 2a: shows a diagram of an optical splitter of a first embodiment.
- Figure 2b: shows a diagram of an optical splitter of a second embodiment.
- Figure 3a: shows a diagram of an optically powered device of a first embodiment.
- Figure 3b: shows a diagram of an optically powered device of a second embodiment.

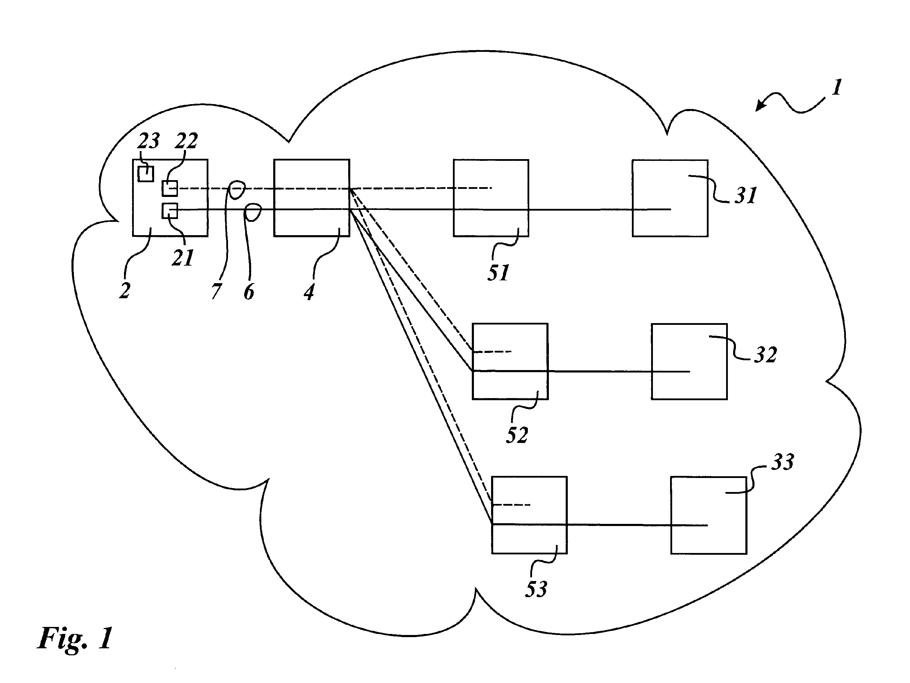

Figure 1 shows a diagram of an optical communication network 1. The optical communication network 1 provides remote optical powering and communication. The optical communication network 1 is an access network. The optical communication network 1 comprises a first termination device 1 located at a central office of a respective optical communication network provider. The optical communication network 1 further comprises an optical splitter 4, three optically powered devices 51, 52 and 53, and three second termination devices 31, 32 and 33.

The first termination device 2 comprises a control unit 23 and two lasers 21 and 22. The control unit 23 controls the two lasers 21 and 22 for providing a bidirectional communication in the optical communication network 1 and for remote optical powering the optically powered devices 51, 52 and 53. The first laser 21 provides a first light signal 6 which is used to transport communication data of the use data traffic between the first termination device 2 and the second termination devices 31, 32 and 33. The second laser 22 provides a second light signal 7 used for remote powering the optically powered devices 51, 52 and 53. The second light signal 7 is further used to transport data traffic used for remote maintenance and administration of the network entities which are selected from the group of second termination device 2, optical splitter 4 and optically powered devices 51, 52 and 53. The data traffic used for remote maintenance and administration comprises status information of the network entities and further control commands for maintaining and administering the network entities.

Remote optical powering and communication in the optical communication network is achieved as follows:
The first termination device sends 2 the first light signal 6 having one or more first wavelengths and comprising communication data together with the associated second light signal 7 having one or more second wavelengths different from the one or more first wavelengths to the optical splitter 4. The optical splitter 4 receives the first light signal 6 and the second light signal 7. The optical splitter 4 forwards the second light signal 7 to the optically powered devices 51, 52 and 53. The optically powered devices 51, 52 and 53 are associated with the second termination devices 31, 32 and 33. The optically powered devices 51, 52 and 53 receive the first light signal 6 and the second light signal 7. The second light signal 7 powers the optically powered devices 51, 52 and 53. The optically powered devices 51, 52 and 53 forward the first light signal 6 to the at least one second termination device 31, 32 and 33 which is preferably located at a premises of a service subscriber to a optical communication service of the provider of the optical communication network 1. The light paths of the first light signal 6 from the first termination device 2 via the optical splitter 4 through the optically powered devices 51, 52 and 53 to the respective second termination devices 31, 32 and 3 is indicated by the full line 6. The light paths of the second light signal 7 from the first termination device 2 via the optical splitter 4 to the optically powered devices 51, 52 and 53 is indicated by the dashed line 7.

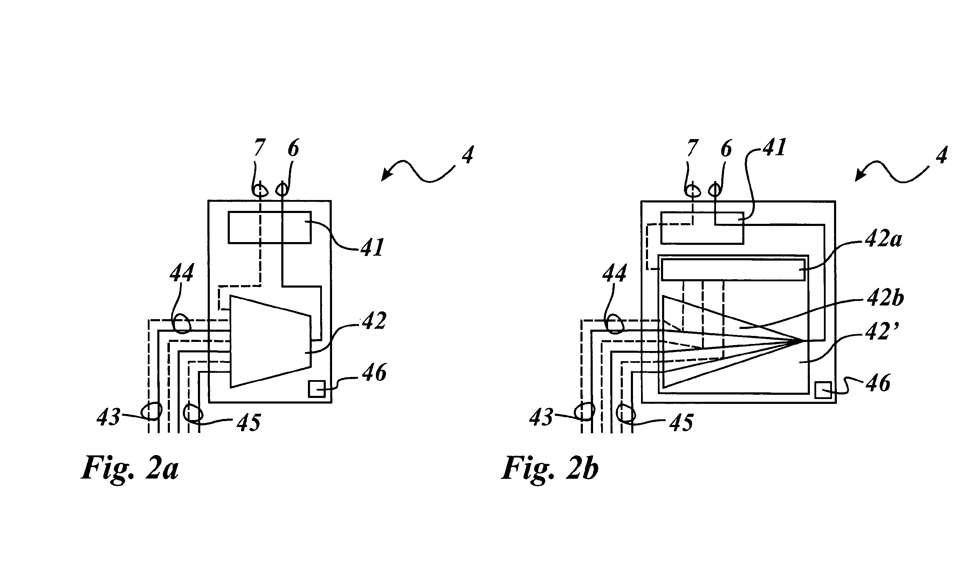

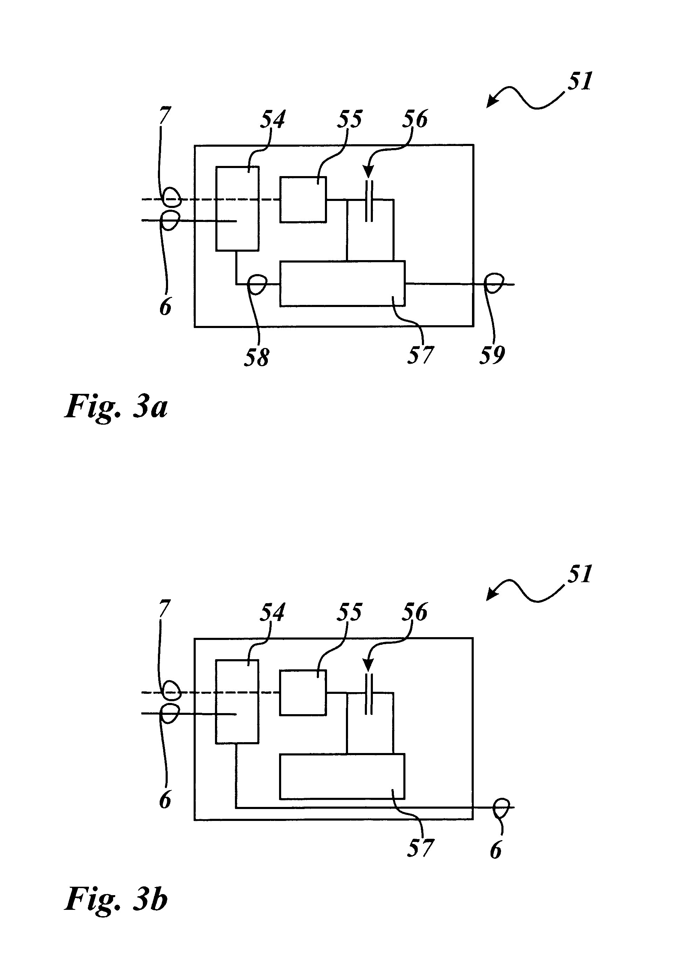

Further technical details are better described by the figures 2a, 2b and 3:
Figure 2a shows a diagram of an optical splitter 4 of a first embodiment. The optical splitter 4 comprises a dual-function arrayed waveguide grating circuit 42 adapted to receive the first light signal 6 having at least one first wavelength and comprising communication data together with the associated second light signal 7 having multiple second wavelengths different from the one or more first wavelengths. In the present case the second light signal consists at least of three different wavelengths each associated with one of the three second termination devices 31, 32 and 33. The optical splitter 4 further comprises an optical coupler 41 and a control unit 46. The control unit 46 is connected to the optical coupler 41 in order to modulate the amplitude of the second light signal 7 for encoding into the second light signal 7 status information of the optical splitter 4 which is sent to the first termination device 2 and/or one of the second termination devices 31, 32 and 33. Furthermore, the control unit 46 of the optical splitter 4 executes control commands received via the second light signal 7 received at the optical coupler 41. The optical coupler 41 of the optical splitter 4 separates or splits the first light signal 6 from the second light signal 7 and forwards these light signals 6 and 7 as input signals to the dual-function arrayed waveguide grating circuit 42 of the optical splitter 4. The dual-function arrayed waveguide grating circuit 42 of the optical splitter 4 separates or splits the second light signal 7 into three corresponding signals having each a wavelength of the second wavelengths. These corresponding signals are associated with the second termination device 31, 32 and 33, wherein these corresponding signals are different from each other for forwarding the corresponding signals as the second light signal 7 to the optically powered device 51, 52 and 53 as associated with the wavelength. Thereby, these corresponding signals are able to power the optically powered device 51, 52 and 53, respectively. The dual-function arrayed waveguide grating circuit 42 provides and forwards these corresponding signals together with copies of the first light signal 6 forming light signal bundles 43, 44 and 45 as output light signals to the optically powered devices 51, 52 and 53, respectively. In order that the splitter 4 can separate or split the second light signal 7 into three corresponding signals having each a wavelength of the second wavelengths the first termination device 2 comprises a s second laser 22 a tunable laser. Furthermore, the wavelengths provided by the second laser 22 are distinguishable by means their linewidths.

Figure 2b shows a diagram of another embodiment of an optical splitter 4. The optical splitter 4 comprises an optical coupler 41, optical switching unit 42a and an optical splitting unit 42b. The optical switching unit 42a and the optical splitting unit 42b correspond to some extend to the dual-function arrayed waveguide grating circuit 42 of the first embodiment of the optical splitter 4 shown in figure 2a, however, with respect to a fixed wavelength instead of the tunable wavelength realization shown in figure 2a. Information is encoded into the first light signal 6 and/or the second light signal 7 by amplitude modulation. Thereby, the first light signal 6 and/or the second light signal 7, respectively can be associated with the second termination devices 31, 32 and 33. The optical splitter 4 further comprises a control unit 46. The control unit 46 is connected to the optical coupler 41 in order to modulate the amplitude of the second light signal 7 for encoding into the second light signal 7 status information of the optical splitter 4 which can be sent back to the first termination device 2. Furthermore, the control unit 46 of the optical splitter 4 can execute control commands received via the second light signal 7 received at the optical coupler 41 similar to that embodiment of the optical splitter 4 shown in figure 2a. The optical coupler 41 receives a first light signal 6 together with the associated second light signal 7. The optical coupler 41 provides the first light signal 6 to the optical splitting unit 42b and the second light signal 7 to the optical switching unit 42a as input light signals. The optical switching unit 42a splits the second light signal 7 into three corresponding signals having the same wavelength. The three corresponding signals are each associated with one of the second termination devices 31, 32 and 33. The optical switching unit 42a controls the optical splitting unit 42b with the three corresponding signals by providing these corresponding signals as input signals to the optical splitting unit 42b. The optical splitting unit 42b provides and forwards these corresponding signals together with copies of the first light signal 6 as light signal bundles 43, 44 and 45 as output light signals to the optically powered devices 51, 52 and 53, respectively. Thereby, the optical splitting unit 42b forwards the first light signal 6 together with the corresponding signals as the second light signal 7 to the optically powered device 51, 52 and 53 in order to power them with the corresponding signals.

In particular, it is possible that the optical splitters 4 of the first and second embodiment shown in the figures 2a and 2b forward the first light signal 6 to a subset of the second termination devices 31, 32 and 33 or each of them depending on the information encoded in the first light signal 6 or the second light signal 7.

Figure 3a shows a diagram of an optically powered device 51 of a first embodiment. For instance the optically powered device 51 is a demarcation point device or any other active network entity requiring a power supply. The demarcation point device 51 is an active device. The optically powered device 51 is associated with the second termination device 31, as shown in figure 1. The optically powered device 51 comprises an optical interface 54, a control unit 57, a photo element 55 and a capacitor 56. The optical interface 54 passes the second light signal 7 to the photo element 55 which charges the capacitor 56. The photo element 55 and the capacitor 56 are electronically connected. The capacitor 56 provides electrical energy to control unit 57 via an electronic connection. The control unit 57 receives the first light signal 6 via the optical interface 54 as indicated by the signal connection 58 and forwards the first light signal 6 via the signal output connection 59 to the second termination device 31. Preferably, the control unit 57 amplifies the first light signal 6 prior forwarding it to the second termination device 31.

Furthermore, it is possible that the control unit 57 of the optically powered device 57 controls the optical interface 54 in order to provide the status and maintenance functionality as described above. For instance, the control unit 57 and/or the optical interface can encode status information, preferably by amplitude modulation, into the first light signal 6 and/or the second light signal 7 and can send the status information to the second termination 2 and/or first termination device. It is also possible that the optically powered device 51 can receive control commands via the first light signal 6 and/or the second light signal 7 via the optical interface 54 for administering and maintenance of the optically powered device 51, wherein the optically powered device 51 can provide the analog functionality as the optical splitter 4. Preferably, the optical interface 54 and/or the control unit 57 are adapted to execute the received control commands.

In order to provide a better separation of the use data traffic and of the traffic of the power signal 7, comprising status and maintenance information data traffic for the transmitting and sending traffic, different wavelengths for the light signals are used. Thereby, the network data traffic can be improved and the use data traffic is unhindered by the status and maintenance information data traffic.

Figure 3b shows a diagram of an optically powered device 51 of a second embodiment. The optically powered device 51 of the second embodiment corresponds to the optically powered device 51 with the exception that the first light signal 6 is forwarded to the second termination device 31 without passing the control unit 57. Thereby, the first light signal 6 is transparently forwarded to the second termination device 31 without being influenced and/or modified by the control unit 57. It is possible, that the second light signal 7 is used to activate and/or deactivate the optically powered device 51.

## Claims

1. Method of remote optical powering and communication in an optical communication network (1),
wherein the method comprises the steps of:
generating, by at least one fixed or tunable wavelength laser (22) of a first termination device (2), a second light signal (7) using an amplitude modulation or a wavelength modulation, respectively for encoding information about an at least one second termination device (31, 32, 33) and/or an at least one optically powered device (51, 52, 53) associated with the at least one second termination device (31, 32, 33), sending, by the first termination device (2), a first light signal (6) having one or more first wavelengths and comprising communication data together with the second light signal (7) having one or more second wavelengths different from the one or more first wavelengths to an optical splitter (4), wherein the first light signal (6) is associated with the second light signal (7),
receiving, by the optical splitter (4), the first light signal (6) and the second light signal (7) and forwarding the second light signal (7) to the at least one optically powered device (51, 52, 53), and
receiving, by the at least one optically powered device (51, 52, 53), the first light signal (6) and the second light signal (7), powering the at least one optically powered device (51, 52, 53) with the second light signal (7) and forwarding the first light signal (6) to the at least one second termination device (31, 32, 33).

2. Method according to claim 1,
wherein the method comprises the steps of:
separating, by a dual-function arrayed waveguide grating circuit (42) of the optical splitter (4), the second light signal (7) into one or more corresponding signals having each a wavelength of the one or more second wavelengths being associated with one or more of the at least one second termination device (31, 32, 33) and being different from each other, and
forwarding, by the optical splitter (4), the one or more corresponding signals as the second light signal (7) to the at least one optically powered device (51, 52, 53) as associated with the wavelength.

3. Method according to claim 1,
wherein the method comprises the steps of:
providing, by an optical coupler (41) of the optical splitter (4), the first light signal (6) to an optical splitting unit (42b) and the second light signal (7) to an optical switching unit (42a) of the optical splitter (4), splitting, by the optical switching unit (42a), the second light signal (7) into one or more corresponding signals having the same wavelength being one of the one or more second wavelengths and being each associated with one or more of the at least one second termination device (31, 32, 33), and
controlling, by the optical switching unit (42a), with the one or more corresponding signals of the second light signal (7) the optical splitting unit (42b) for forwarding the first light signal (6) to the at least one second termination devices (31, 32, 33) together with the one or more corresponding signals as the second light signal (7) to the at least one optically powered device (51, 52, 53) associated with the at least one second termination device (31, 32, 33).

4. Method according to claim 1,
wherein the optical splitter (4) forwards the first light signal (6) to a subset of the at least one second termination device (31, 32, 33) or each of the at least one second termination device (31, 32, 33).

5. Method according to claim 1,
wherein the method comprises the steps of:
providing, by the first termination device (2), at least two lasers (21, 22), and
emitting, by the at least two lasers (21, 22), the first light signal (6) and the second light signal (7), the first light signal (6) and the second light signal (7) being distinguishable by means of the one or more linewidths of their one or more wavelengths associated with the first light signal (6) and the second light signal (7).

6. Method according to claim 1,
wherein the method comprises the steps of:
splitting, by an optical interface (54) of the at least one optically powered device (51), the received first light signal (6) and second light signal (7), providing, by the optical interface (54), the second light signal (7) to the photo element (55),
charging, by the photo element (55), a battery and/or a capacitor (56) of the at least one optically powered device (51), and
powering, by the battery and/or the capacitor (56), a control unit (57) of the at least one optically powered device (51).

7. Method according to claim 1,
wherein the method comprises the steps of:
determining status information at the optical splitter (4) and/or at the at least one optically powered device (51, 52, 53),
encoding, by an optical coupler (41) of the optical splitter (4) and/or an optical interface (54) of the at least one optically powered device (51, 52, 53), respectively, the status information into the second light signal (7), and,
transmitting, by the optical coupler (41) and/or by the optical interface (54), respectively, the second light signal (7) to the first termination device (2).

8. Termination device (2) for remote optical powering and communication in an optical communication network (1) comprising an optical splitter (4), at least one further termination device (31, 32, 33) and at least one optically powered device (51, 52, 53) associated with the at least one further termination device (31, 32, 33), wherein the termination device (2) comprises at least one laser (21, 22) and a control unit (23) adapted to generate by at least one fixed or tunable wavelength laser (22) of the termination device (2), a second light signal (7) using an amplitude modulation or a wavelength modulation, respectively for encoding information about the at least one further termination device (31, 32, 33) and/or the at least one optically powered device (51, 52, 53),
send a first light signal (6) having one or more first wavelengths together with the second light signal (7) having one or more second wavelengths different from the one or more first wavelengths to the optical splitter (4), wherein the first light signal (6) and the second light signal (7) are associated and generated by the at least one laser (21, 22), wherein the first light signal (6) comprises communication data, and wherein the second light signal (7) enables powering of the at least one optically powered device (51, 52, 53).

9. System for remote optical powering and communication in an optical communication network (1), wherein the system comprises a first termination device (2), at least one second termination device (31, 32, 33), an optical splitter (4), at least one optically powered device (51, 52, 53), and at least one fixed or tunable wavelength laser (22) of the first termination device (2), wherein the at least one optically powered device (51, 52, 53) is associated with the at least one second termination device (31, 32, 33), wherein the at least one fixed or tunable wavelength laser (22) is adapted to generate a second light signal (7) using an amplitude modulation or a wavelength modulation, respectively for encoding information about the at least one second termination device (31, 32, 33) and/or the at least one optically powered device (51, 52, 53), wherein the first termination device (2) is adapted to send a first light signal (6) having one or more first wavelengths and comprising communication data together with the second light signal (7) having one or more second wavelengths different from the one or more first wavelengths to the optical splitter (4), wherein the first light signal (6) is associated with the second light signal (7), wherein the optical splitter (4) is adapted to receive the first light signal (6) and the second light signal (7) and forward the second light signal (7) to the at least one optically powered device (51, 52, 53), and wherein the the at least one optically powered device (51, 52, 53) is adapted to receive the first light signal (6) and the second light signal (7), power the at least one optically powered device (51, 52, 53) with the second light signal (7) and forward the first light signal (6) to the at least one second termination device (31, 32, 33).

## Patentansprüche

1. Verfahren für eine entfernt positionierte optische Leistungsversorgung und Kommunikation in einem optischen Kommunikationsnetzwerk (1),
wobei das Verfahren die folgenden Schritte umfasst:
Generieren, durch mindestens einen durch feste oder abstimmbare Wellenlängen gekennzeichneten Laser (22) eines ersten Abschlussgeräts (2), eines zweiten Lichtsignals (7) unter Verwendung einer Amplitudenmodulation oder einer Wellenlängenmodulation für das Codieren von Informationen zu mindestens einem zweiten Abschlussgerät (31, 32, 33) und/oder mindestens einem Gerät mit optischer Leistungsversorgung (51, 52, 53), das mindestens einem zweiten Abschlussgerät (31, 32, 33) zugeordnet ist.
Senden, durch das erste Abschlussgerät (2), eines ersten Lichtsignals (6) mit einer oder mehreren erste Wellenlängen, Kommunikationsdaten umfassend, zusammen mit einem zweiten Lichtsignal (7), das eine oder mehrere zweite, von der einen oder den mehreren ersten Wellenlängen abweichende Wellenlängen umfasst, zu einem optischen Splitter (4), wobei das erste Lichtsignal (6) dem zweiten Lichtsignal (7) zugeordnet ist,
Empfangen des ersten Lichtsignals (6) und des zweiten Lichtsignals (7) durch den optischen Splitter (4) und Weiterleiten des zweiten Lichtsignals (7) an mindestens ein Gerät mit optischer Leistungsversorgung (51, 52, 53), und
Empfangen des ersten Lichtsignals (6) und des zweiten Lichtsignals (7) durch mindestens ein Gerät mit optischer Leistungsversorgung (51, 52, 53), das mindestens eine Gerät mit optischer Leistungsversorgung (51, 52, 53) durch das zweite Lichtsignal (7) mit Leistung versorgend und das erste Lichtsignal (6) zum mindestens einen zweiten Abschlussgerät (31, 32, 33) weiterleitend.

2. Verfahren nach Anspruch 1,
wobei das Verfahren die folgenden Schritte umfasst:
Trennen des zweiten Lichtsignals (7) durch eine mit Dualfunktion angereihte Wellenleiter-Gitterschaltung (42) des optischen Splitters (4) in eines oder in mehrere zugehörige Signale, von denen jedes eine Wellenlänge der einen zweiten Wellenlänge oder der mehreren zweiten Wellenlängen besitzt, die einem oder mehreren des mindestens einen zweiten Abschlussgeräts (31, 32, 33) zugewiesen und unterschiedlich voneinander sind, und
Weiterleiten durch den optischen Splitter (4) des einen oder der mehreren zugehörigen Signale als das zweite, der Wellenlänge zugeordnete Lichtsignal (7) an das mindestens eine Gerät mit optischer Leistungsversorgung (51, 52, 53).

3. Verfahren nach Anspruch 1,
wobei das Verfahren die folgenden Schritte umfasst:
zur Verfügung stellen, durch einen optischen Koppler (41) des optischen Splitters (4), des ersten Lichtsignals (6) für eine optische Splittingeinheit (42b) und des zweiten Lichtsignals (7) für eine optische Schalteinheit (42a) des optischen Splitters (4),
Splitten des zweiten Lichtsignals (7) durch die optische Schalteinheit (42a) in eines oder in mehrere zugehörige Signale mit derselben Wellenlänge, die der zweiten Wellenlänge oder einer der mehreren zweiten Wellenlängen entspricht und die einem oder mehreren des mindestens einen zweiten Abschlussgeräts (31, 32, 33) zugewiesen sind, und
das Steuern der optischen Splittingeinheit (42b) über die optische Schalteinheit (42a) mit dem einen oder den mehreren entsprechenden Signalen des zweiten Lichtsignals (7) zwecks Weiterleitung des ersten Lichtsignals (6) zu dem mindestens einen zweiten Abschlussgerät (31, 32, 33), zusammen mit dem einen oder den mehreren entsprechenden Signalen als zweites Lichtsignal (7) an das mindestens eine Gerät mit optischer Leistungsversorgung (51, 52, 53), das dem mindestens einen zweiten Abschlussgerät (31, 32, 33) zugeordnet ist.

4. Verfahren nach Anspruch 1,
wobei der optischen Splitter (4) das erste Lichtsignal (6) zu einem Teilsatz weiterleitet, bestehend aus dem mindestens einen zweiten Abschlussgerät (31, 32, 33) oder aus jedem der mindestens ein Gerät umfassenden Gruppe der zweiten Abschlussgeräte (31, 32, 33).

5. Verfahren nach Anspruch 1,
wobei das Verfahren die folgenden Schritte umfasst:
Zur Verfügung stellen von mindestens zwei Lasern (21, 22) durch das erste Abschlussgerät (2), und
Senden des ersten Lichtsignals (6) und des zweiten Lichtsignals (7) durch die mindestens zwei Laser, wobei das erste Lichtsignal (6) und das zweite Lichtsignal (7) unterscheidbar sind durch die eine oder die mehreren Linienbreiten ihrer einen oder mehreren, dem ersten Lichtsignal (6) und dem zweiten Lichtsignal (7) zugeordneten Wellenlängen.

6. Verfahren nach Anspruch 1,
wobei das Verfahren die folgenden Schritte umfasst:
Splitten, durch eine optische Schnittstelle (54) des mindestens einen Geräts mit optischer Leistungsversorgung (51), des ersten empfangenen Lichtsignals (6) und des zweiten Lichtsignals (7), durch eine optische Schnittstelle (54) das zweite Lichtsignal (6) einem Fotoelement (55) zur Verfügung stellend,
Laden der Batterie und oder eines Kondensators (56) mindestens eines Geräts mit optischer Leistungsversorgung (51) sowie des mindestens einen Geräts mit optischer Leistungsversorgung (51) durch ein Fotoelement (55).
Leistungsversorgung durch die Batterie und/oder den Kondensator (56) einer Kontrolleinheit (57) des mindestens einen Geräts mit optischer Leistungsversorgung (51).

7. Verfahren nach Anspruch 1,
wobei das Verfahren die folgenden Schritte umfasst:
Bestimmen von Statusinformationen an dem optischen Splitter (4) und/oder an dem mindestens einen Gerät mit optischer Leistungsversorgung (51, 52, 53), Codieren, entweder durch einen optischen Koppler (41) des optischen Splitters (4) und/oder durch eine optische Schnittstelle (54) des mindestens einen Geräts mit optischer Leistungsversorgung (51, 52, 53), der im zweiten Lichtsignal (7) enthaltenen Statusinformationen, und
Übermitteln des zweiten Lichtsignals (7) an das erste Abschlussgerät (2) entweder durch den optischen Koppler (41) und/oder durch die optische Schnittstelle (54).

8. Ein Abschlussgerät (2) für eine entfernt positionierte optische Leistungsversorgung und Kommunikation in einem optischen Kommunikationsnetzwerk (1), einen optischen Splitter (4), mindestens ein weiteres Abschlussgerät (31, 32, 33) und mindestens ein einem weiteren Abschlussgerät (31, 32, 33) zugeordnetes Gerät mit optischer Leistungsversorgung (51, 52, 53) umfassend, wobei das Abschlussgerät (2) mindestens einen Laser (21, 22) und eine Steuerungseinheit (23) umfasst, ausgelegt für das Generieren eines zweiten Lichtsignals (7) durch mindestens einen durch feste oder abstimmbare Wellenlänge gekennzeichneten Laser (22) des Abschlussgeräts (2), eine Amplitudenmodulation oder eine Wellenlängenmodulation verwendend, entweder für das Codieren von Information über das mindestens eine weitere Abschlussgerät (31, 32, 33) und/oder über das mindestens eine Gerät mit optischer Leistungsversorgung (51, 52, 53),
und für das Senden eines ersten Lichtsignals (6), das eine oder mehrere erste Wellenlängen gemeinsam hat mit dem zweiten Lichtsignal (7), das sich in einer oder mehreren zweiten Wellenlängen von der einen oder den mehreren ersten Wellenlängen an den optischen Splitter (4) unterscheidet, wobei das erste Lichtsignal (6) und das zweite Lichtsignal von mindestens einem Laser (21, 22) generiert und zugewiesen werden, wobei das erste Lichtsignal (6) Kommunikationsdaten umfasst und wobei das zweite Lichtsignal (7) die Leistungsversorgung des mindestens einen Geräts mit optischer Leistungsversorgung (51, 52, 53) aktiviert.

9. System für eine entfernt positionierte optische Leistungsversorgung und Kommunikation in einem optischen Kommunikationsnetzwerk (1), wobei das System ein erstes Abschlussgerät (2), mindestens ein zweites Abschlussgerät (31, 32, 33), einen optischen Splitter (4), mindestens ein Gerät mit optischer Leistungsversorgung (51, 52, 53) und mindestens einen durch feste oder abstimmbare Wellenlängen gekennzeichneten Laser (22) des ersten Abschlussgeräts (2) umfasst, wobei das mindestens eine Gerät mit optischer Leistungsversorgung (51, 52, 53) dem mindestens einen zweiten Abschlussgerät (31, 32, 33) zugeordnet ist, wobei der mindestens eine durch feste oder abstimmbare Wellenlängen gekennzeichnete Laser (22) für das Generieren eines zweiten Lichtsignals (7) ausgelegt ist, eine Amplitudenmodulation oder eine Wellenlängenmodulation verwendend, entweder für das Codieren von Information über das mindestens eine weitere Abschlussgerät (31, 32, 33) und/oder über das mindestens eine Gerät mit optischer Leistungsversorgung (51, 52, 53), wobei das erste Abschlussgerät (2) ausgelegt ist für das Senden eines ersten Lichtsignals (6) mit einer oder mehreren ersten Wellenlängen, Kommunikationsdaten umfassend, zusammen mit einem zweiten Lichtsignal (7), bei dem eine oder mehrere zweite Wellenlängen von der einen oder den mehreren Wellenlängen des ersten optischen Splitters (4) abweichen, wobei das erste Lichtsignal (6) dem zweiten Lichtsignal zugeordnet ist, wobei der optische Splitter (4) ausgelegt ist für den Empfang des ersten Lichtsignals (6) und des zweiten Lichtsignals (7) sowie zur Weiterleitung des zweiten Lichtsignals zu dem mindestens einen Gerät mit optischer Leistungsversorgung (51, 52, 53), und wobei das mindestens eine Gerät mit optischer Leistungsversorgung (51, 52, 53) ausgelegt ist für den Empfang des ersten Lichtsignals (6) und des zweiten Lichtsignals (7), zur Leistungsversorgung des mindestens einen Geräts mit optischer Leistungsversorgung (51, 52, 53) durch das zweite Lichtsignal (7) und zur Weiterleitung des ersten Lichtsignals (6) an das mindestens eine zweite Abschlussgerät (31, 32, 33).

## Revendications

1. Procédé d'alimentation et de communication optiques à distance dans un réseau de communication optique (1),
dans lequel le procédé comprend les étapes suivantes :
générer, par au moins un laser à longueur d'onde fixe ou réglable (22) d'un premier dispositif de terminaison (2), un second signal lumineux (7) à l'aide d'une modulation d'amplitude ou d'une modulation en longueur d'onde, respectivement pour coder des informations relatives à au moins un second dispositif de terminaison (31, 32, 33) et/ou au moins un dispositif à alimentation optique (51, 52, 53) associé à l'au moins un second dispositif de terminaison (31, 32, 33),
envoyer, par le premier dispositif de terminaison (2), un premier signal lumineux (6) présentant une ou plusieurs premières longueurs d'onde et comprenant des données de communication ainsi que le second signal lumineux (7) présentant une ou plusieurs secondes longueurs d'onde différentes de la ou des première(s) longueur(s) d'onde à un répartiteur optique (4), dans lequel le premier signal lumineux (6) est associé au second signal lumineux (7),
recevoir, par le répartiteur optique (4), le premier signal lumineux (6) et le second signal lumineux (7) et transférer le second signal lumineux (7) à l'au moins un dispositif à alimentation optique (51, 52, 53), et
recevoir, par l'au moins un dispositif à alimentation optique (51, 52, 53), le premier signal lumineux (6) et le second signal lumineux (7), alimenter l'au moins un dispositif à alimentation optique (51, 52, 53) au moyen du second signal optique (7) et transférer le premier signal optique (6) à l'au moins un second dispositif de terminaison (31, 32, 33).

2. Procédé selon la revendication 1,
dans lequel le procédé comprend les étapes suivantes :
séparer, par un circuit de réseau de longueur d'onde en matrice à double fonction (42) du répartiteur optique (4), le second signal optique (7) en un ou plusieurs signaux correspondants présentant chacun une longueur d'onde de la ou des seconde(s) longueur(s) d'onde associée(s) à un ou plus de l'au moins un dispositif de terminaison (31, 32, 33) et différents les uns des autres, et
transférer, par le répartiteur optique (4), le ou les signaux correspondants en tant que second signal lumineux (7) à l'au moins un dispositif à alimentation optique (51, 52, 53) associé à la longueur d'onde.

3. Procédé selon la revendication 1,
dans lequel le procédé comprend les étapes suivantes :
fournir, par un coupleur optique (41) du répartiteur optique (4), le signal lumineux (6) à une unité de répartition optique (42b) et le second signal lumineux (7) à une unité de commutation optique (42a) du répartiteur optique (4), diviser, par l'unité de commutation optique (42a), le second signal lumineux (7) en un ou plusieurs signaux correspondants d'une longueur d'onde identique à la ou
les secondes longueurs d'onde et chacun étant associé à un ou plus de l'au moins un dispositif de terminaison (31, 32, 33), et
contrôler, par l'unité de commutation optique (42a), à l'aide du ou des signaux correspondants du second signal lumineux (7) l'unité de répartition optique (42b) pour transférer le premier signal lumineux (6) à l'au moins un dispositif de terminaison (31, 32, 33) ainsi que le ou les signaux correspondants en tant que second signal lumineux (7) à l'au moins un dispositif à alimentation optique (51, 52, 53) associé à l'au moins un second dispositif de terminaison (31, 32, 33).

4. Procédé selon la revendication 1,
dans lequel le répartiteur optique (4) transfère le premier signal lumineux (6) à un sous-ensemble de l'au moins un second dispositif de terminaison (31, 32, 33) ou à chacun de l'au moins un dispositif de terminaison (31, 32, 33).

5. Procédé selon la revendication 1,
dans lequel le procédé comprend les étapes suivantes :
produire, par le premier dispositif de terminaison (2), au moins deux lasers (21, 22), et
émettre, par les au moins deux lasers (21, 22), le premier signal lumineux (6) et le second signal lumineux (7), le premier signal lumineux (6) et le second signal lumineux (7) pouvant être distingués au moyen de la ou des largeurs spectrales de leur ou leurs longueurs d'onde associées au premier signal lumineux (6) et au second signal lumineux (7).

6. Procédé selon la revendication 1,
dans lequel le procédé comprend les étapes suivantes :
diviser, par une interface optique (54) de l'au moins un dispositif à alimentation optique (51), le premier signal lumineux (6) et le second signal lumineux (7) reçus, fournir, par l'interface optique (54), le second signal lumineux (7) à l'élément photoélectrique (55),
charger, par l'élément photoélectrique (55), une batterie et/ou un condensateur (56) de l'au moins un dispositif à alimentation optique (51), et
alimenter, par la batterie et/ou le condensateur (56), une unité de commande (57) de l'au moins un dispositif à alimentation optique (51).

7. Procédé selon la revendication 1,
dans lequel le procédé comprend les étapes suivantes :
déterminer les informations d'état au niveau du répartiteur optique (4) et/ou au niveau de l'au moins un dispositif à alimentation optique (51, 52, 53), coder, par un coupleur optique (41) du répartiteur optique (4) et/ou une interface optique (54) de l'au moins un dispositif à alimentation optique (51, 52, 53), respectivement, les informations de statut dans le second signal lumineux (7), et
transmettre, par le coupleur optique (41) et/ou l'interface optique (54), respectivement, le second signal lumineux (7) au premier dispositif de terminaison (2).

8. Dispositif de terminaison (2) pour une alimentation et une communication optiques à distance dans un réseau de communication optique (1) comprenant un répartiteur optique (4), au moins un autre dispositif de terminaison (31, 32, 33) et au moins un dispositif à alimentation optique (51, 52, 53) associé à l'au moins un autre dispositif de terminaison (31, 32, 33), dans lequel le dispositif de terminaison (2) comprend au moins un laser (21, 22) et une unité de commande (23) adaptée pour générer par au moins un laser à longueur d'onde fixe ou réglable (22) du dispositif de terminaison (2), un second signal lumineux (7) au moyen d'une modulation d'amplitude ou d'une modulation en longueur d'onde, respectivement, pour coder les informations relatives à l'au moins un autre dispositif de terminaison (31, 32, 33) et/ou à l'au moins un dispositif à alimentation optique (51, 52, 53), envoyer un premier signal lumineux (6) présentant une ou plusieurs premières longueurs d'onde ainsi que le second signal lumineux (7) présentant une ou plusieurs secondes longueurs d'onde différentes des unes ou plusieurs premières longueurs d'onde du répartiteur optique (4),
dans lequel le premier signal lumineux (6) et le second signal lumineux (7) sont associés et générés par l'au moins un laser (21, 22), dans lequel le premier signal lumineux (6) comprend des données de communication, et dans lequel le second signal lumineux (7) active l'alimentation de l'au moins un dispositif à alimentation optique (51, 52, 53).

9. Système de terminaison pour une alimentation et une communication optiques à distance dans un réseau de communication optique (1), dans lequel le système comprend un premier dispositif de terminaison (2), au moins un second dispositif de terminaison (31, 32, 33), un répartiteur optique (4), au moins un dispositif à alimentation optique (51, 52, 53) et au moins un laser à longueur d'onde fixe ou réglable (22) du dispositif de terminaison (2), dans lequel l'au moins un dispositif à alimentation optique (51, 52, 53) est associé à l'au moins un second dispositif de terminaison (31, 32, 33), dans lequel l'au moins un laser à longueur d'onde fixe ou réglable (22) est adapté pour générer un second signal lumineux (7) au moyen d'une modulation d'amplitude ou d'une modulation en longueur d'onde, respectivement, pour coder les informations relatives à l'au moins un second dispositif de terminaison (31, 32, 33) et/ou à l'au moins un dispositif à alimentation optique (51, 52, 53), dans lequel le premier dispositif de terminaison (2) est adapté pour envoyer un premier signal lumineux (6) présentant une ou plusieurs premières longueurs d'onde et comprenant des données de communication ainsi que le second signal lumineux (7) présentant une ou plusieurs secondes longueurs d'onde différentes de la ou des premières longueurs d'onde au répartiteur optique (4), dans lequel le premier signal lumineux (6) est associé au second signal lumineux (7), dans lequel le répartiteur optique (4) est adapté pour recevoir le premier signal lumineux (6) et le second signal lumineux (7) et transférer le second signal lumineux (7) à l'au moins un dispositif à alimentation optique (51, 52, 53), et dans lequel l'au moins un dispositif à alimentation optique (51, 52, 53) est adapté pour recevoir le premier signal lumineux (6) et le second signal lumineux (7), alimenter l'au moins un dispositif à alimentation optique (51, 52, 53) avec le second signal lumineux (7) et transférer le premier signal lumineux (6) à l'au moins un second dispositif de terminaison (31, 32, 33).
